# EUROPEAN PATENT APPLICATION

(11) **EP 4 191 489 A1**
(43) Date of publication of application: **07.06.2023**
(21) Application number: 22209807.1
(22) Date of filing: 28.11.2022
(51) Int. Cl.: G06Q 10/06, G06Q 10/20, G07C 5/00, G07C 5/08

(54) **MAINTENANCE CONTROL SYSTEM AND METHOD**

(30) Priority: 02.12.2021 US 202117457394
(71) Applicant: Transportation IP Holdings, LLC, Norwalk, CT 06851 (US)
(72) Inventor: Scholz, Bernhard Joseph, Norwalk, 06851 (US); Roddy, Nicholas, Norwalk, 06851 (US); Quigley, Jason, Norwalk, 06851 (US); Kacyon, Jeffry, Norwalk, 06851 (US)
(74) Representative: Laufhütte, Dieter

(57) **Abstract**

A system is provided having a prescription controller for a vehicle system having a database. The controller may store an initial diagnostic analysis for the vehicle system at the database, the initial diagnostic analysis including a reference diagnostic section having at least one placeholder, and modify the initial diagnostic analysis based on, for example, one of vehicle system type, vehicle system configuration, historical data related to the vehicle system, or an operating system related to an operating condition to form a modified diagnostic analysis.

## Description

### BACKGROUND

### Technical Field.

The subject matter described herein relates to a control system for repair and maintenance of a vehicle system.

### Description of the Art.

When a vehicle system has an operating condition such as a hot engine, hot axle, etc., often the cause is unknown. As a result, a maintenance person typically must come up with diagnostic tests, or diagnostic analysis, that are utilized in an attempt to diagnose what is causing the operating condition. These diagnostic tests, or prescriptions (Rx), are utilized by maintenance technicians and craftsperson to repair or maintain equipment that has failed, or is in danger of failing.

When creating a prescription, the maintenance person may create a set of instructions, or tasks, used to diagnose or address an operating condition. The set of instructions may then be utilized by the maintenance technician, or another maintenance person during diagnosis. The set of instructions may be recorded so that if a diagnosis cannot be made after following the set of the instructions, a recording is made that the specific prescription has already been attempted.

When creating a prescription that contains the set of instructions, or tasks, a balance needs to be struck between creating generic content that applies across a wide set of failure modes, equipment models, types, configurations, etc., and creating multiple versions of content specific to the different models, types, configurations, etc. In particular, there is a desire to include as many generic steps as possible, so that when putting together a report certain steps can simply be immediately recorded. For example, when attempting to diagnose why an engine is running hot, regardless of model, type, configuration, the radiator fluid level, may always be checked. Still, often the issue causing the operating condition is not something that is common among all models, types, configurations, etc. For example, a vehicle with a hybrid engine may have a very different set of instructions compared to an internal combustion engine. Still, having too many specific directions can lead to irrelevant directions. It may be desirable to have a system and method that differs from those that are currently available.

### BRIEF DESCRIPTION

In accordance with one embodiment, a method is provided that includes storing an initial diagnostic analysis for a vehicle system at a database of the prescription controller. The initial diagnostic analysis may include a reference diagnostic section having at least one placeholder. The method may include obtaining the initial diagnostic analysis including the reference diagnostic section having the at least one placeholder based on an operating condition of the vehicle system, and modifying the initial diagnostic analysis based on at least one of vehicle system type, vehicle system configuration, historical data related to the vehicle system, or an operating system related to the operating condition to form a modified diagnostic analysis. The method may include communicating the modified diagnostic analysis to a maintenance controller.

In accordance with one embodiment, a system is provided that includes a prescription controller for a vehicle system having a database, and one or more processors. The controller may store an initial diagnostic analysis for the vehicle system at the database, the initial diagnostic analysis including a reference diagnostic section having at least one placeholder, and modify the initial diagnostic analysis based on at least one of vehicle system type, vehicle system configuration, historical data related to the vehicle system, or an operating system related to an operating condition to form a modified diagnostic analysis. The prescription controller may communicate the modified diagnostic analysis to a maintenance controller.

In accordance with one embodiment, a system is provided that may include a prescription controller having one or more processors and a database. The system may be for a vehicle system. The one or more processors may store an initial diagnostic analysis for the vehicle system at the database, the initial diagnostic analysis including a reference diagnostic section having at least one placeholder, and obtain the initial diagnostic analysis including the reference diagnostic section having the at least one placeholder based on an operating condition of the vehicle system. The initial diagnostic analysis may include a set of tasks associated with the operating condition of the vehicle system. The one or more processors may modify the initial diagnostic analysis based operating system data related to an operating system related to the operating condition to form a modified diagnostic analysis, and communicate the modified diagnostic analysis to a maintenance controller. Optionally, the operating system data may include at least one of vehicle system type, vehicle system configuration, or historical data related to the operating system.

### BRIEF DESCRIPTION OF THE DRAWINGS

The inventive subject matter may be understood from reading the following description of non-limiting embodiments, with reference to the attached drawings, wherein below:
Figure 1 is a schematic view of a vehicle system;
Figure 2 is a schematic view of a control system of a vehicle system;
Figure 3 is a block flow diagram of a method for providing maintenance to a vehicle system;
Figure 4 is a schematic of an initial diagnostic analysis; and
Figure 5 is a schematic of a modified diagnostic analysis.

### DETAILED DESCRIPTION

One or more embodiments of the subject matter described herein relates to a control system for a vehicle system. The control system may include a prescription controller with a database. The database may include plural initial diagnostic analyses. These analyses may be each based on an operating condition of the vehicle system. Each diagnostic analysis includes a reference diagnostic section that can include one or more placeholders for inputting, or removing data related to the vehicle system, operating condition, operating system with the operating condition, historical data, environmental data, or the like. As a result of populating the placeholders, a modified diagnostic analysis may be formed for use by a maintenance technician.

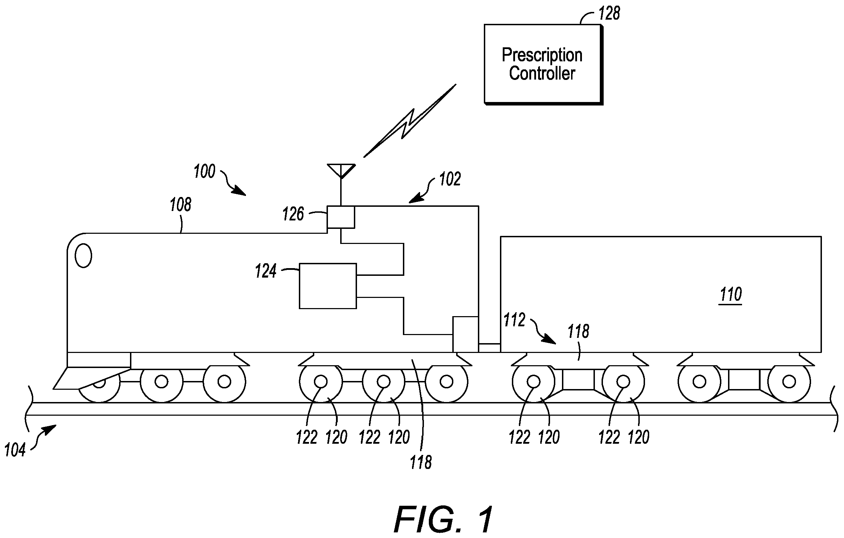

Figure 1 illustrates a schematic diagram of one example of a vehicle system 100. While Figure 1 illustrates the vehicle system as a rail vehicle, in other examples the vehicle system can include automobiles, marine vessels, airplanes, off road vehicle, construction vehicles, agricultural vehicles, and other fleet vehicles. A suitable vehicle system may include a single vehicle or plural vehicles. The vehicle system may travel along a route 104 on a trip from a starting or departure location to a destination or arrival location. In the illustrated example, the vehicle system may include a propulsion-generating vehicle 108 and a non-propulsion-generating vehicle 110 that are mechanically interconnected to one another to travel together along the route. In this example, the vehicle system may include at least one propulsion-generating vehicle and optionally, one or more non-propulsion-generating vehicles. Alternatively, the vehicle system may be formed of only a single propulsion-generating vehicle or plural propulsion-generating vehicles that travel in a coordinated manner.

The propulsion-generating vehicle may generate tractive efforts to propel (for example, pull or push) the vehicle system along routes. The propulsion-generating vehicle may include a propulsion system, such as an engine, one or more traction motors, and/or the like, that operate to generate tractive effort to propel the vehicle system. Although one propulsion-generating vehicle and one non-propulsion-generating vehicle are shown in Figure 1, the vehicle system may include multiple propulsion-generating vehicles and/or multiple non-propulsion-generating vehicles. In an alternative embodiment, the vehicle system only may include the propulsion-generating vehicle such that the propulsion-generating vehicle is not coupled to the non-propulsion-generating vehicle or another kind of vehicle. In yet another embodiment, the vehicles in the vehicle system are logically or virtually coupled together, but not mechanically coupled together. For example, the vehicles may communicate with each other to coordinate their movements so that the vehicles move together as a virtual block - a convoy, consist, swarm, fleet, platoon or the like - without the vehicles being physically coupled with each other by couplers.

The propulsion-generating vehicle may include one or more other operating systems 112 that control the operation of the vehicle system. In one example, the operating system is a braking system that generates braking effort to slow or stop movement of the vehicle system. Alternatively, the operating system may be a heating and cooling system, engine and/or transmission system, a bearing system, a wheel system, or the like.

In the example of Figure 1, the vehicles of the vehicle system each include multiple wheels 120 that engage the route and at least one axle 122 that couples left and right wheels together (only the left wheels are shown in Figure 1). Optionally, the wheels and axles are located on one or more trucks or bogies 118. Optionally, the trucks may be fixed-axle trucks, such that the wheels are rotationally fixed to the axles, so the left wheel rotates the same speed, amount, and at the same times as the right wheel. In one embodiment, the vehicle system may not include axles, such as in some mining vehicles, electric vehicles, etc.

The vehicle system may include a vehicle controller 124 that may further include a wireless communication system 126 that allows wireless communications between vehicles in the vehicle system and/or with remote locations, such as a prescription controller 128. The communication system may include a receiver and a transmitter, or a transceiver that performs both receiving and transmitting functions. The communication system may include an antenna and associated circuitry.

The prescription controller may be at a dispatch, maintenance location, or the like. The prescription controller may include a database that may include numerous prescriptions, or diagnostic analyses for diagnosis of what is causing an operating condition to the vehicle system. The operating condition may include a hot engine, temperature variances of axles, high or low pressures in a brake line, low fluid levels, errors in sensor readings, or the like. Each operating condition presents an operating parameter or characteristic that may require repair or maintenance.

Each diagnostic analysis may include a reference diagnostic section. Each diagnostic analysis begins as an initial diagnostic analysis that has a generic portion, or set of tasks that is considered common for the diagnostic analysis that are part of the reference diagnostic section. For example, if an engine is determined as operating as too hot, the initial diagnostic analysis can include a set of tasks such as reviewing temperature data related to the environment of the engine, checking the radiator fluid level, checking oil life, etc. In all, regardless of the engine manufacturer, model number, etc. these are steps that are always undertaken when a hot engine is presented.

In addition, the reference diagnostic section can include placeholders. Placeholders may include any instruction that may be added or removed from the diagnostic analysis, a number, character, letter, or the like that may be replaced, or a conversion placeholder. Instructions that may be added or removed include tasks of the set of tasks that may not be relevant to every diagnostic analysis. For example, when an operating condition related to an engine is provided, if the engine is an internal combustion engine, then tasks related to a hybrid engine are not needed. So, in an initial diagnostic analysis, the reference diagnostic section may include a placeholder that may include a set of tasks related to a hybrid engine and an internal combustion engine. In one example, the set of tasks related to the hybrid engine may be presented in a different color than the rest of the set of instructions, in a different font, underlined or bolded, etc. to bring attention to the placeholder set of tasks. Then, if the engine is not a hybrid engine, the placeholder set of tasks related to the hybrid engine may be eliminated from the diagnostic analysis. In another example, the initial diagnostic analysis may include a placeholder section that indicates "insert hybrid engine tasks here" as a placeholder in the reference diagnostic section. In this manner, if the engine is identified as a hybrid engine, the prescription controller may search the prescription controller database for a hybrid engine set of tasks and populate the placeholder with the hybrid engine set of tasks. In this manner, the reference diagnostic section may be modified based on information, tasks, data, etc. related to the operating condition, the vehicle system, the operating system with the operating condition, or the like.

In another example, the placeholder may be a number, character, letter, or the like that may be replaced. For example, for a final, or modified diagnostic analysis that is utilized by a technician, information related to vehicle system, operating system having the operating condition, the operating condition, etc. is to be provided. As one example, a placeholder may indicate "brake system type", "brake system model", "brake system manufacture", "vehicle system manufacturer", "mileage", "hours of use", "historical repair summary", "service logs", "date", etc. Each placeholder may convey information desired when filling out a maintenance report, but will be different and dependent on the vehicle system, operating system, operating condition, etc. Still, the placeholder presents a reminder that this information is required in a modified diagnostic analysis.

The placeholder may be a conversion placeholder. A conversion placeholder may include a formula, algorithm, lookup table, mathematical function, or the like associated with conversion placeholder to tailor the modified diagnostic analysis for a customer. The conversion placeholder may convert a first unit to a second unit. For example, a conversion placeholder may be for a temperature reading. Based on the vehicle system owner, a temperature reading in Celsius may be desired instead of Fahrenheit. Similarly, additional conversions such a pounds and kilograms, kilograms to grams, kilogram to pounds, liters to gallons, gallons to liters, horsepower to watts, watts to horsepower, Celsius to Kelvin, or the like may be provided. The conversion may be determined based on the location of the vehicle system owner, a setting provided by the vehicle system owner, or the like. Again, the placeholder presents a place where data, characteristics, information, tasks, etc. may be provided, replaced, included, modified, or the like to convert the initial diagnostic analysis into a modified diagnostic analysis that may be utilized by a maintenance technician.

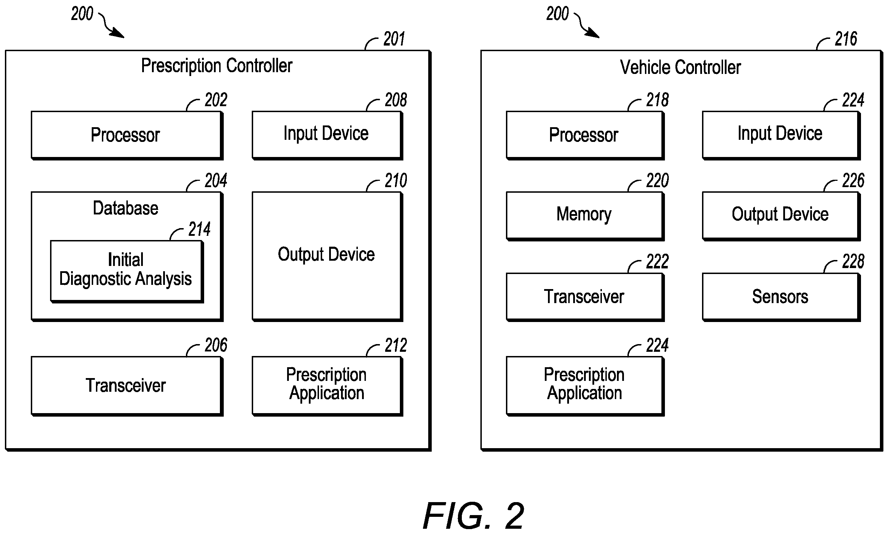

Figure 2 provides a schematic illustration of a control system 200 that may communicate and monitor numerous vehicle systems. To this end, the vehicles systems can include automobiles, rail vehicles, marine vessels, airplanes, off road vehicles, construction vehicles, vehicles in a fleet, or the like. The control system may include a prescription controller 201 that may include one or more processors 202 (e.g., microprocessors, integrated circuits, field programmable gate arrays, etc.). The prescription controller may be located remotely from the vehicle systems, at a dispatch, at a station, at a static location, etc. In one example, the prescription controller may be a maintenance controller.

The prescription controller optionally may include a database 204, which may be an electronic computer-readable storage device or medium. The prescription controller database may be within the housing of the prescription controller, or alternatively may be on a separate device that may be communicatively coupled to the controller and the one or more processors therein. By "communicatively coupled," it is meant that two devices, systems, subsystems, assemblies, modules, components, and the like, are joined by one or more wired or wireless communication links, such as by one or more conductive (e.g., copper) wires, cables, or buses; wireless networks; fiber optic cables, and the like. The database, or controller memory, can include a tangible, non-transitory computer-readable storage medium that stores data on a temporary or permanent basis for use by the one or more processors. The database may include one or more volatile and/or non-volatile memory devices, such as random access memory (RAM), static random access memory (SRAM), dynamic RAM (DRAM), another type of RAM, read only memory (ROM), flash memory, magnetic storage devices (e.g., hard discs, floppy discs, or magnetic tapes), optical discs, and the like. The database may be utilized to store information related to historical data, vehicle data, prescription (Rx) data, etc. The database may then be used by the one or more processors to access data for making determinations related to the health of each vehicle system, including the health of each operating system of each vehicle system. In one example, data is logged into a diagnostic analysis related to a vehicle system. The diagnostic analysis may include a prescription that has a set of tasks. In another example, data, such as a video feed, may be recorded and stored in the database for later analysis. In addition, algorithms, applications, models, or the like may be stored within the memory to be used by the one or more processors in making determinations related to the health of vehicle systems within the area.

The prescription controller may include a transceiver 206 that may communicate with plural vehicle controllers, and at least one remote device. The transceiver may be a single unit or be a separate receiver and transmitter. In one example, the transceiver may only transmit signals, but alternatively may send (e.g., transmit and/or broadcast) and receive signals.

The prescription controller may include an input device 208 and an output device 210. The input device may be an interface between an operator, or monitor, and the one or more processors. The input device may include a display or touch screen, input buttons, ports for receiving memory devices, etc. In this manner, an operator or monitor may manually provide parameters into the controller, including vehicle parameters, route parameters, and trip parameters. Similarly, the output device may present information and data to an operator, or provide prompts for information and data. The output device may similarly be a display or touch screen. In this manner, a display or touch screen may be an input device and an output device.

The prescription controller can additionally include a prescription application 212 for putting together reports related to diagnostic analysis to be undertaken by a maintenance technician. The prescription application may be a program, instructions, tasks, or the like, that may be utilized by the one or more processors to obtain an initial diagnostic analysis 214 related to a prescription. Optionally, the prescription application can represent hardware circuity that may include and/or is connected with one or more processors for performing operations described in connection with the control system. The initial diagnostic analysis may be stored in the database of the prescription controller, or received from a remote device.

In one example, the remote device may be a controller at a back office system. An example back office system may be a global performance optimization center (GPOC). As used here, the GPOC is a center dedicated to maintaining, servicing and dispatching vehicle systems that are utilizing a network of routes. The GPOC may monitor rail vehicle systems and numerous networks for tracks. At the GPOC a controller may have access to a database that may include historical data related to specific vehicle system component models, configurations, types, software version loads, duty and use, upgrades and repairs, hours of service, etc. Other external data may be available in the GPOC, such as weather data and route-based information. In addition, the GPOC may include expert personnel that may be able to provide suggested prescriptions based at least in part on a (current and/or predicted future) operating condition of a vehicle system. In one example, the prescription controller may be at the GPOC center. In another example, the prescription controller may be in communication with a controller at the GPOC.

During operation, the initial diagnostic analysis may be used to form a modified diagnostic analysis. This may, in turn, be used by a maintenance technician. In one example, the initial diagnostic analysis may present a diagnostic reference section. The diagnostic reference section may include placeholders that may be modified to form the modified diagnostic analysis utilized by the maintenance technician. The placeholders may be modified by searching for and populating the placeholders with historical data related to a manufacture, owner, vehicle system, operating system, operating condition, or the like.

In another example, if the initial diagnostic analysis may include the performance of a live dead live test when maintenance on a battery of a hybrid vehicle has occurred, the diagnostic analysis may include a task of recording the voltage obtained during the live portion of the test, the voltage obtained during the dead portion of the test, and the voltage obtained during the second live portion of the test. As a place holder the digits "999" presented in red, or other color, may be presented in front of the term "Volts" in the diagnostic analysis. In another example the term "Volt Reading", or "Place Reading Here", or the like may be provided. The place holder may draw attention to a maintenance person that a measurement or value needs to be placed in the diagnostic analysis in the place of the place holder. In this manner, the place holder may include text that may be edited by the maintenance person.

In all, by modifying the placeholders a modified diagnostic analysis may be provided. For example, if the operating condition is faulty brakes, an initial diagnostic analysis may be formed to provide a set of tasks related to diagnosing why the brakes are faulty. Such diagnostic analysis may include pressure test, braking models, checking for wear of brake pads, or the like. In particular, for each braking system, regardless of manufacturer, model, or otherwise, several tasks of the diagnostic analysis are identical. The identical tasks of the diagnostic analysis may then be included in the initial diagnostic analysis. In addition, placeholders may be presented that include "model number", "manufacturer", "braking system type", or the like that may be populated into the initial diagnostic analysis. In another example a placeholder may include additional tasks and depends on the type of braking system utilized by a vehicle system. Such task may then be included, added, eliminated, etc. from the initial diagnostic analysis to form a modified diagnostic analysis for use by a technician.

In one example, once the initial diagnostic analysis is obtained at the prescription controller, the initial diagnostic analysis may be edited, including adding or eliminating placeholder data or tasks, adding tasks, eliminating tasks, populating data or the like to form the modified diagnostic analysis. However, once editing begins, any modifications to the initial diagnostic analysis may not be saved in the initial diagnostic analysis unless permission is provided. Specifically, while the initial diagnostic analysis may be modified and the modified diagnostic analysis may be saved at the prescription controller, the modified diagnostic analysis is saved as a new file and is not written over the initial diagnostic analysis. In this manner, the next time an operating condition related to the initial diagnostic analysis occurs, the initial diagnostic analysis is again utilized. Thus, while with permission, the initial diagnostic analysis may be modified or edited and saved over, such permission is required. Permission may include providing a password, identification, answering a security question, or the like. By having an initial diagnostic analysis that can only be overwritten by authorized individuals, the initial diagnostic analysis is preserved for use for specific operating conditions. Still, by allowing that initial diagnostic analysis to be modified, a more customized diagnostic analysis that eliminates irrelevant tasks may be provided.

The prescription controller may receive data from vehicle controllers 216 of vehicle systems to compare and analyze the data and make a health diagnosis related to the individual vehicle systems. In one example, the vehicle system only has a single vehicle controller. Alternatively, the vehicle controller has numerous vehicle controllers.

Each vehicle controller can include one or more processors 218 (microprocessors, integrated circuits, field programmable gate arrays, etc.), a memory 220, which may be an electronic, computer-readable storage device or medium, a transceiver 222 may communicate with the prescription controller, an input device 224 and an output device 226. The input device may be an interface between an operator, or monitor, and the one or more processors. The input device may include a display or touch screen, input buttons, ports for receiving memory devices, etc. In this manner, an operator, or monitor at the vehicle controller may manually provide parameters into the vehicle controller, including vehicle parameters, route parameters, and trip parameters.

The vehicle controller may include one or more sensors 228 disposed within and adjacent the area to detect movement data, area data, vehicle data, route data, etc. The one or more sensors may be pressure sensors, temperature sensors, speed sensors, voltmeters, angular speed sensors, etc. and may measure fluid levels, wheel speed, axle temperature, fluid temperature, engine performance, braking performance and wear, etc. Alternatively, the one or more sensors are separate from the vehicle controller and merely communicate signals, data, information, to the vehicle controller. The one or more sensors may monitor different operating systems of the vehicle system to obtain vehicle system data that may be utilized by the prescription application of the prescription controller, or may be utilized by the one or more processors of the vehicle controller to analyze and make determinations that are communicated to the prescription application. The vehicle system data from each vehicle system can then be utilized to compare to one another to determine faults and unhealthy operating systems. Optionally, the vehicle controller may include a prescription application 230. The prescription application may more efficiently processes data and information for communication with the prescription application of the monitoring device.

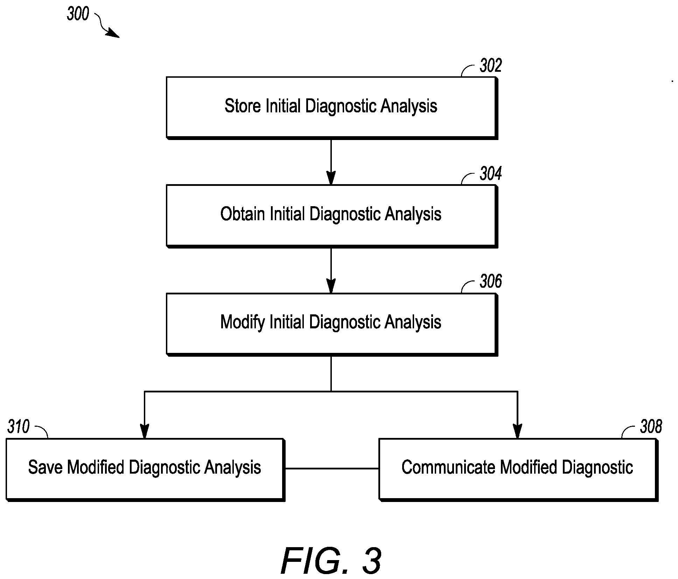

Figure 3 illustrates a method 300 for providing maintenance to a vehicle system. In one example, the vehicle system is the vehicle system of Fig. 1. In another example, the method may be performed at least in part by the prescription controller as described in relation to Fig. 2.

At step 302, a prescription controller stores an initial diagnostic analysis for a vehicle system at a database of the prescription controller. In one example, the prescription controller is a controller at an GPOC. Alternatively, the prescription controller is a maintenance controller. The initial diagnostic analysis can be formed from historical data, including previous diagnostic analysis utilized to diagnose a cause for an operating condition of the vehicle system. The initial diagnostic analysis may be directed toward diagnosing causes of operating conditions in an operating system of a vehicle system. In example embodiments, the diagnostic analysis may be related to general maintenance based on vehicle system milage, a hot engine, low fluid levels, hot axles, pressure variance in a braking system, communication card failure in a communication system, or the like.

The initial diagnostic analysis may include a set of instructions, tasks, etc. to be performed by a maintenance technician. In one example, the diagnostic analysis may include a reference diagnostic section that may include the set of tasks. For example, when a communication card is coupled in a high voltage battery housing, to examine the communication card, the battery must first be disconnected for safety reasons. So the set of tasks or instructions include how to disconnect the battery, perform a live, dead, live test, etc. The set of tasks may include, prior to examination of the communication card, attempting to communicate through different communication channels, to determine if faulty communication may be the result of a bad receiver at a remote location. The reference diagnostic section may include placeholders that can include additional tasks, or places to enter data. In one example, the placeholder may simply be the term "TITLE" indicating that a title related to the diagnostic analysis should be provided that depends upon the operating condition and diagnostic analysis performed. In another example, there may be one set of tasks related to a battery that is part of an electric vehicle system, and another set of tasks related to a battery that is part of a hybrid vehicle system. Depending on the vehicle system type, one set of tasks may be eliminated from the initial diagnostic analysis.

At step 304, the prescription controller obtains the initial diagnostic analysis. Once an operating condition is identified, and the need for a diagnostic analysis realized, the prescription controller may search the database for an initial diagnostic analysis specific to the operating condition provided. In one example, if an engine is determined to be operating at too high of a temperature, a hot engine initial diagnostic analysis may be obtained. To this end, the initial diagnostic analysis may have searchable names to facilitate location of the initial diagnostic analysis. In another example, the initial diagnostic analysis may be sorted based on the operating system, such that an operating system such as an engine, braking system, communication system, heating and cooling system, axles, or the like may provide a folder, or initial file that when accessed provides a list of initial diagnostic analyses that may be utilized depending upon the operating condition. In another example, the initial diagnostic analysis may be sorted by manufactures, vehicle system owners, etc.

At step 306, the initial diagnostic analysis is modified to form a modified diagnostic analysis. Upon receiving the initial diagnostic analysis, the reference diagnostic section may be modified. In one example, the modification may include modifying placeholders of the reference diagnostic section with data, information, etc., and/or adding or eliminating tasks associated with the placeholder. In one example, the one or more processors of the prescription controller may access a database of the prescription controller to begin populating the reference diagnostic section, populate placeholders, add or eliminate placeholders including additional tasks, or the like. In one example, the database may include information related to the vehicle system itself, including the make and model, ownership information, millage, previous maintenance or repair, or the like. The database may include information related to the operating system that has the operating condition. For example, if a hot engine is provided, data and information related to the engine type, and manufacturer, other diagnostic analyses for that engine that resulted in correctly diagnosing or repairing an engine, or the like, may be obtained. In this manner, the prescription controller may modify the initial diagnostic analysis.

At step 308, the prescription controller communicates the modified diagnostic analysis to a maintenance controller. In one example, the maintenance controller requests a diagnostic analysis from the prescription controller, and in response, the prescription controller forms the modified diagnostic analysis including through modifying placeholders as described. Once the modified diagnostic analysis is formed, the modified diagnostic analysis may be communicated to a maintenance technician to perform the set of tasks provided in the modified diagnostic analysis.

At step 310, the prescription controller provides permission to an operator to modify the initial diagnostic analysis based on the modified diagnostic analysis. In one example, when an operator determines that one or more tasks should be added or eliminated from the initial diagnostic analysis, and operator obtains permission from the prescription controller to make such modification to the initial diagnostic analysis. The permission may be provided as a result of the use of a password, passcode, credentials, or the like. Once granted, the initial diagnostic analysis may be modified, and saved over the initial diagnostic analysis to provide a new initial diagnostic analysis.

In this manner, the prescription controller forms a modified diagnostic analysis for the vehicle system to determine a cause of an operating condition of the vehicle system based on the initial diagnostic analysis, including the reference diagnostic section. By utilizing the reference diagnostic section including the placeholders, the modified diagnostic analysis may be customized accordingly. By receiving the customized modified diagnostic analysis with the reference diagnostic section from the prescription controller, time is saved, and assurance is provided that no tasks are missed when performing the tasks of the diagnostic analysis. Meanwhile, the initial diagnostic analysis may be updated from time to time to provide enhanced maintenance for the vehicle systems.

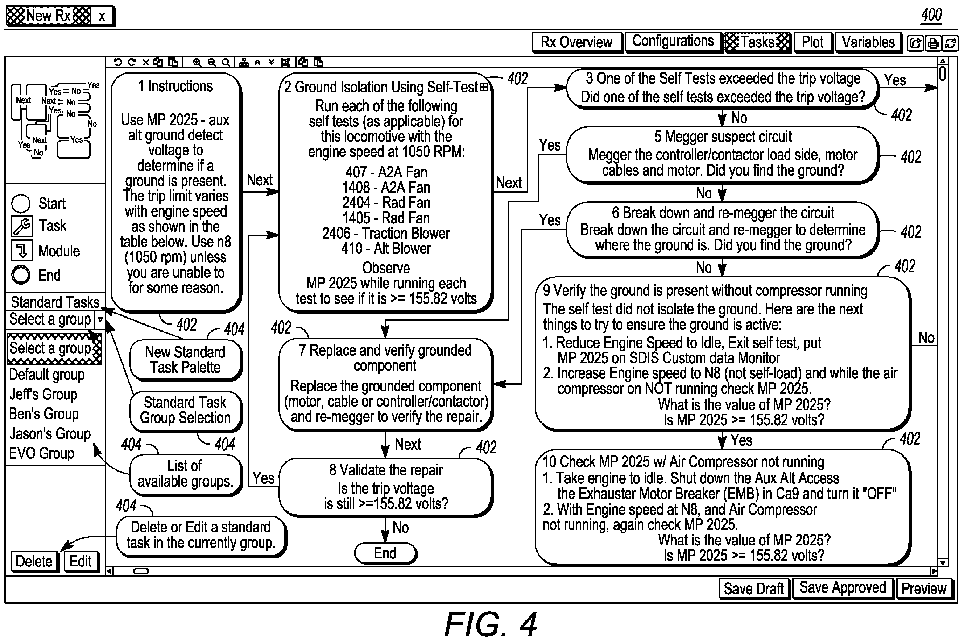

Figure 4 illustrates an example initial diagnostic analysis 400. The initial diagnostic analysis may include a set of tasks 402 related to an operating condition of a vehicle system. In this example, the set of tasks are presented as a flow chart with step-by-step instructions, including multiple procedures to diagnose what is causing an operating condition. In the example, several placeholders 404 are provided that may be utilized to modify the initial diagnostic analysis to form the modified diagnostic analysis. As illustrated, the placeholders include suggestions to list groups, add standard tasks, or the like. In one example, the placeholders are highlighted, presented in a different color, presented in a different font, underlined, bolded, italicized, etc. to bring attention to the placeholder for modification. In the example, an option to delete or edit a standard task is provided to give the individual modifying the initial diagnostic analysis the ability to customize the tasks depending on the make, model, type, manufacturer, etc. related to the vehicle system and operating system.

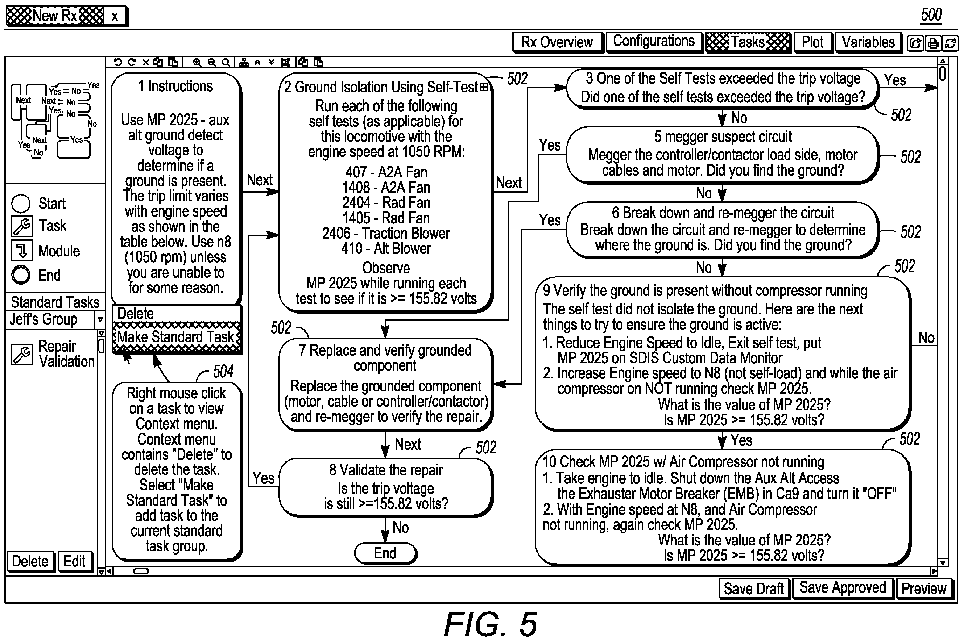

Figure 5 illustrates a modified diagnostic analysis 500 that has been modified from the initial diagnostic analysis of Fig. 4. As illustrated the initial set of tasks 502 are still provided, and in this example, a placeholder 504 is being utilized to provide an addition task. In this manner, the individual utilizing the initial diagnostic analysis is able to insert and additional task into the flow chart based on the make, model, type, manufacturer, etc. related to the vehicle system and operating system. While in this example, a placeholder is utilized to add a task to form the modified diagnostic analysis, in other examples, the initial set of task may include a placeholder task that may be eliminated to provide the modified diagnostic analysis. As illustrated, the modified diagnostic analysis may be saved as a draft, or otherwise a save must be approved. In this manner additional control over modifications to the initial diagnostic analysis are provided.

In some example embodiments, a method is provided that may include storing, with a prescription controller, an initial diagnostic analysis for a vehicle system at a database of the prescription controller. The initial diagnostic analysis may include a reference diagnostic section having at least one placeholder. The method may include obtaining the initial diagnostic analysis including the reference diagnostic section having the at least one placeholder based on an operating condition of the vehicle system, and modifying the initial diagnostic analysis based on at least one of vehicle system type, vehicle system configuration, historical data related to the vehicle system, or an operating system related to the operating condition to form a modified diagnostic analysis. The method may include communicating the modified diagnostic analysis to a maintenance controller.

Optionally, the at least one placeholder may be one of replaceable content, removable instructions, or a conversion placeholder. In one aspect, modifying the initial diagnostic analysis may include eliminating the removable instructions. In another aspect, the reference diagnostic section may include at least one of a flow chart, a decision tree, or a task list that may include at least one instruction related to the operating condition of the vehicle system. Optionally, modifying the initial diagnostic analysis may include searching, with the prescription controller, the database for data related to the operating condition, the vehicle system type, or the vehicle system configuration; and populating, with the prescription controller, the data into the reference diagnostic section. In one example, the method may include storing the modified diagnostic analysis in the database. In another example, the method may include updating the reference diagnostic section to update the initial diagnostic analysis with an updated reference diagnostic section. Optionally, the method may include saving the initial diagnostic analysis with the updated reference diagnostic section in the database without saving modifications made to the initial diagnostic analysis related to modifications to the initial diagnostic analysis based on the at least one of the vehicle system type, the vehicle system configuration, or the operating system related to the operating condition. In yet another example, the reference diagnostic section may include at least one of a title of the initial diagnostic analysis, a question about an operating condition, an image of an operating system component, a document related to the operating condition, or a set of instructional content. Optionally, the reference diagnostic section may include task content obtained from the database, the task content including the at least one of the title of the initial diagnostic analysis, the question about the operating condition, the image of the operating system component, the document related to the operating condition, or set of instructional content. In one embodiment, the placeholder may include at least one of a title, model number, manufacturer name, component name, part number, or instructional text.

In some example embodiments, a system is provided that may include a prescription controller for a vehicle system having a database, and one or more processors. The one or more processors may store an initial diagnostic analysis for the vehicle system at the database, the initial diagnostic analysis including a reference diagnostic section having at least one placeholder, and modify the initial diagnostic analysis based on at least one of vehicle system type, vehicle system configuration, historical data related to the vehicle system, or an operating system related to an operating condition to form a modified diagnostic analysis. The one or more processors may communicate the modified diagnostic analysis to a maintenance controller.

Optionally, the at least one placeholder may be one of replaceable content, removable instructions, or a conversion placeholder. In one aspect, the conversion placeholder may convert a first unit to a second unit. In another aspect, the reference diagnostic section may include at least one of a flow chart, a decision tree, or a task list that may include at least one instruction related to the operating condition of the vehicle system. In one example, the vehicle system may be a rail vehicle system. In another example, the reference diagnostic section may include a set of tasks associated with the operating condition of the vehicle system. Optionally, the task content may include at least one of a title of the diagnostic analysis, a question about the operating condition, an image of an operating system component, or a document related to the operating condition.

In some example embodiments a system is provided that may include a prescription controller for a vehicle system having a database, and one or more processors. The one or more processors may store an initial diagnostic analysis for the vehicle system at the database, the initial diagnostic analysis including a reference diagnostic section having at least one placeholder, and obtain the initial diagnostic analysis including the reference diagnostic section having the at least one placeholder based on an operating condition of the vehicle system. The initial diagnostic analysis may include a set of tasks associated with the operating condition of the vehicle system. The one or more processors may modify the initial diagnostic analysis based operating system data related to an operating system related to the operating condition to form a modified diagnostic analysis and communicate the modified diagnostic analysis to a maintenance controller. Optionally, the operating system data may include at least one of vehicle system type, vehicle system configuration, or historical data related to the hardware or the operating system.

In one embodiment, the controllers or systems described herein may have a local data collection system deployed and may use machine learning to enable derivation-based learning outcomes. The controllers may learn from and make decisions on a set of data (including data provided by the various sensors), by making data-driven predictions and adapting according to the set of data. In embodiments, machine learning may involve performing a plurality of machine learning tasks by machine learning systems, such as supervised learning, unsupervised learning, and reinforcement learning. Supervised learning may include presenting a set of example inputs and desired outputs to the machine learning systems. Unsupervised learning may include the learning algorithm structuring its input by methods such as pattern detection and/or feature learning. Reinforcement learning may include the machine learning systems performing in a dynamic environment and then providing feedback about correct and incorrect decisions. In examples, machine learning may include a plurality of other tasks based on an output of the machine learning system. In examples, the tasks may be machine learning problems such as classification, regression, clustering, density estimation, dimensionality reduction, anomaly detection, and the like. In examples, machine learning may include a plurality of mathematical and statistical techniques. In examples, the many types of machine learning algorithms may include decision tree based learning, association rule learning, deep learning, artificial neural networks, genetic learning algorithms, inductive logic programming, support vector machines (SVMs), Bayesian network, reinforcement learning, representation learning, rule-based machine learning, sparse dictionary learning, similarity and metric learning, learning classifier systems (LCS), logistic regression, random forest, K-Means, gradient boost, K-nearest neighbors (KNN), a priori algorithms, and the like. In embodiments, certain machine learning algorithms may be used (e.g., for solving both constrained and unconstrained optimization problems that may be based on natural selection). In an example, the algorithm may be used to address problems of mixed integer programming, where some components restricted to being integer-valued. Algorithms and machine learning techniques and systems may be used in computational intelligence systems, computer vision, Natural Language Processing (NLP), recommender systems, reinforcement learning, building graphical models, and the like. In an example, machine learning may be used making determinations, calculations, comparisons and behavior analytics, and the like.

In one embodiment, the controllers may include a policy engine that may apply one or more policies. These policies may be based at least in part on characteristics of a given item of equipment or environment. With respect to control policies, a neural network can receive input of a number of environmental and task-related parameters. These parameters may include, for example, operational input regarding operating equipment, data from various sensors, location and/or position data, and the like. The neural network can be trained to generate an output based on these inputs, with the output representing an action or sequence of actions that the equipment or system should take to accomplish the goal of the operation. During operation of one embodiment, a determination can occur by processing the inputs through the parameters of the neural network to generate a value at the output node designating that action as the desired action. This action may translate into a signal that causes the vehicle to operate. This may be accomplished via backpropagation, feed forward processes, closed loop feedback, or open loop feedback. Alternatively, rather than using backpropagation, the machine learning system of the controller may use evolution strategies techniques to tune various parameters of the artificial neural network. The controller may use neural network architectures with functions that may not always be solvable using backpropagation, for example functions that are non-convex. In one embodiment, the neural network has a set of parameters representing weights of its node connections. A number of copies of this network are generated and then different adjustments to the parameters are made, and simulations are done. Once the output from the various models are obtained, they may be evaluated on their performance using a determined success metric. The best model is selected, and the vehicle controller executes that plan to achieve the desired input data to mirror the predicted best outcome scenario. Additionally, the success metric may be a combination of the optimized outcomes, which may be weighed relative to each other.

In some example embodiments, the device performs one or more processes described herein. In some example embodiments, the device performs these processes based on processor executing software instructions stored by a computer-readable medium, such as a memory and/or a storage component. A computer-readable medium (e.g., a non-transitory computer-readable medium) is defined herein as a non-transitory memory device. A memory device may include memory space located inside of a single physical storage device or memory space spread across multiple physical storage devices.

Software instructions may be read into a memory and/or a storage component from another computer-readable medium or from another device via the communication interface. When executed, software instructions stored in a memory and/or a storage component cause the processor to perform one or more processes described herein. Additionally or alternatively, hardwired circuitry may be used in place of or in combination with software instructions to perform one or more processes described herein. Thus, embodiments described herein are not limited to any specific combination of hardware circuitry and software.

As used herein, the terms "processor" and "computer," and related terms, e.g., "processing device," "computing device," and "controller" may be not limited to just those integrated circuits referred to in the art as a computer, but refer to a microcontroller, a microcomputer, a programmable logic controller (PLC), field programmable gate array, and application specific integrated circuit, and other programmable circuits. Suitable memory may include, for example, a computer-readable medium. A computer-readable medium may be, for example, a random-access memory (RAM), a computer-readable non-volatile medium, such as a flash memory. The term "non-transitory computer-readable media" represents a tangible computer-based device implemented for short-term and long-term storage of information, such as, computer-readable instructions, data structures, program modules and sub-modules, or other data in any device. Therefore, the methods described herein may be encoded as executable instructions embodied in a tangible, non-transitory, computer-readable medium, including, without limitation, a storage device and/or a memory device. Such instructions, when executed by a processor, cause the processor to perform at least a portion of the methods described herein. As such, the term may include tangible, computer-readable media, including, without limitation, non-transitory computer storage devices, including without limitation, volatile and non-volatile media, and removable and non-removable media such as firmware, physical and virtual storage, CD-ROMS, DVDs, and other digital sources, such as a network or the Internet.

The singular forms "a", "an", and "the" include plural references unless the context clearly dictates otherwise. "Optional" or "optionally" means that the subsequently described event or circumstance may or may not occur, and that the description may include instances where the event occurs and instances where it does not. Approximating language, as used herein throughout the specification and claims, may be applied to modify any quantitative representation that could permissibly vary without resulting in a change in the basic function to which it may be related. Accordingly, a value modified by a term or terms, such as "about," "substantially," and "approximately," may be not to be limited to the precise value specified. In at least some instances, the approximating language may correspond to the precision of an instrument for measuring the value. Here and throughout the specification and claims, range limitations may be combined and/or interchanged, such ranges may be identified and include all the sub-ranges contained therein unless context or language indicates otherwise.

This written description uses examples to disclose the embodiments, including the best mode, and to enable a person of ordinary skill in the art to practice the embodiments, including making and using any devices or systems and performing any incorporated methods. The claims define the patentable scope of the disclosure, and include other examples that occur to those of ordinary skill in the art. Such other examples are intended to be within the scope of the claims if they have structural elements that do not differ from the literal language of the claims, or if they include equivalent structural elements with insubstantial differences from the literal language of the claims.

## Claims

1. A method, comprising:
storing an initial diagnostic analysis for a vehicle system in a database, the initial diagnostic analysis including a reference diagnostic section having at least one placeholder;
obtaining the initial diagnostic analysis including the reference diagnostic section having the at least one placeholder based at least in part on an operating condition of the vehicle system;
modifying the initial diagnostic analysis based on at least one of: a vehicle system type, vehicle system configuration, and historical data related to the vehicle system to form a modified diagnostic analysis; and
communicating the modified diagnostic analysis to a maintenance controller.

2. The method of claim 1, wherein the at least one placeholder is one of replaceable content, removable instructions, or a conversion placeholder, and wherein modifying the initial diagnostic analysis includes eliminating the removable instructions.

3. The method of claim 1, wherein the reference diagnostic section includes at least one of a flow chart, a decision tree, or a task list that includes at least one instruction related to the operating condition of the vehicle system; and wherein modifying the initial diagnostic analysis includes searching the database for data related to the operating condition, the vehicle system type, or the vehicle system configuration; and populating, with the prescription controller, the data into the reference diagnostic section.

4. The method of claim 1, further comprising storing the modified diagnostic analysis in the database.

5. The method of claim 1, further comprising: updating the reference diagnostic section to update the initial diagnostic analysis with an updated reference diagnostic section; and saving the initial diagnostic analysis with the updated reference diagnostic section in the database without saving modifications made to the initial diagnostic analysis related to modifications to the initial diagnostic analysis based on the at least one of the vehicle system type, the vehicle system configuration, or the operating system related to the operating condition.

6. The method of claim 1, wherein the reference diagnostic section includes at least one of a title of the initial diagnostic analysis, a question about an operating condition, an image of an operating system component, a document related to the operating condition, or a set of instructional content; and wherein the reference diagnostic section includes task content obtained from the database, the task content including the at least one of the title of the initial diagnostic analysis, the question about the operating condition, the image of the operating system component, the document related to the operating condition, or set of instructional content.

7. The method of claim 1, wherein the placeholder includes at least one of a title, model number, manufacturer name, component name, part number, or instructional text.

8. A system comprising:
a prescription controller for a vehicle system having a database, and having one or more processors that are configured to:
store an initial diagnostic analysis for the vehicle system at the database, the initial diagnostic analysis including a reference diagnostic section having at least one placeholder;
modify the initial diagnostic analysis based on at least one of vehicle system type, vehicle system configuration, historical data related to the vehicle system, or an operating system related to an operating condition to form a modified diagnostic analysis; and
communicate the modified diagnostic analysis to a maintenance controller.

9. The system of claim 8, wherein the at least one placeholder is one of replaceable content, removable instructions, or a conversion placeholder; and wherein the conversion placeholder converts a first unit to a second unit.

10. The system of claim 8, wherein the vehicle system is a rail vehicle system.

11. The system of claim 8, wherein the reference diagnostic section includes at least one of a flow chart, a decision tree, or a task list that includes at least one instruction related to the operating condition of the vehicle system.

12. The system of claim 8, wherein the reference diagnostic section includes a set of tasks associated with the operating condition of the vehicle system.

13. The system of claim 8, wherein the task content includes at least one of a title of the diagnostic analysis, a question about the operating condition, an image of an operating system component, or a document related to the operating condition.

14. A system comprising:
a prescription controller for a vehicle system having a database, and one or more processors configured to:
store an initial diagnostic analysis for the vehicle system at the database, the initial diagnostic analysis including a reference diagnostic section having at least one placeholder;
obtain the initial diagnostic analysis including the reference diagnostic section having the at least one placeholder based on an operating condition of the vehicle system, the initial diagnostic analysis including a set of tasks associated with the operating condition of the vehicle system;
modify the initial diagnostic analysis based operating system data related to an operating system related to the operating condition to form a modified diagnostic analysis; and
communicate the modified diagnostic analysis to a maintenance controller.

15. The system of claim 14, wherein the operating system data includes at least one of vehicle system type, vehicle system configuration, or historical data related to the operating system.
